# EUROPÄISCHE PATENTANMELDUNG

(11) **EP 0 829 837 A1**
(43) Veröffentlichungstag der Anmeldung: **18.03.1998**
(21) Anmeldenummer: 97113539.7
(22) Anmeldetag: 06.08.1997
(51) Int. Cl.: G08G 1/09

(54) **Verfahren zur fahrtroutenspezifischen Selektion von Verkehrsinformationen und Empfangsgerät zum Ausführen des Verfahrens**

(30) Priorität: 12.09.1996 DE 19637127
(71) Anmelder: Mannesmann VDO Aktiengesellschaft, 60388 Frankfurt/M. (DE)
(72) Erfinder: Tilgner, Rainer, 64380 Rossdorf (DE)
(74) Vertreter: Klein, Thomas, Dipl.-Ing.

(57) **Zusammenfassung**

Bei einem Verfahren zur fahrtroutenspezifischen Selektion von Verkehrsinformationen, bei denen die Verkehrsinformationen von Sendern an Empfangsgeräte insbesondere in Kfz übertragen werden, wobei die Verkehrsinformationen Ortscodierungen für geographische Gebiete aufweisen, geographische Gebiete anhand bestimmter Kriterien ausgewählt werden und die Verkehrsinformationen für die ausgewählten geographischen Gebiete wiedergegeben werden, ist vorgesehen.

## Beschreibung

Die vorliegende Erfindung betrifft ein Verfahren zur fahrtroutenspezifischen Selektion von Verkehrsinformationen nach dem Oberbegriff des Anspruchs 1 und ein Empfangsgerät zum Ausführen des Verfahrens.

Es ist bekannt, Verkehrsinformationen per Radiosender an Rundfunkempfänger, insbesondere in Kraftfahrzeugen, zu übertragen. Nachteilig hierbei ist es, daß dem Kraftfahrer eine Vielzahl von Verkehrsinformationen angeboten werden, die seine Fahrtstrecke nicht betreffen und er somit unnötig abgelenkt wird. Weiterhin ist es bekannt, mit dem "Radiodatasystem" (RDS) digitale Daten im sogenannten "Traffic Message Channel" (TMC) zu übertragen. Die Meldungen werden dabei nach dem ALERT C-Protokoll mit Ortscodierungen versehen und von den Radiosendern ausgestrahlt. Im Radioempfangsgerät sind die möglichen Orts- und Ereignisinformationen explizit abgelegt. Die empfangenen Daten werden dann von dem Radioempfangsgerät ausgegeben, wenn die Ortscodierungen im Radioempfangsgerät mit den Ortscodierungen der übertragenen Daten übereinstimmen. Nachteilig hierbei ist die eingeschränkte Übertragungskapazität und insbesondere die begrenzte Ortscodierung, da die Ortsinformationen im Gerät exakt beschrieben werden und daher nicht beliebig erweiterbar bzw. detaillierbar sind. Nachteilig ist weiterhin, daß eine Auswahl von individuellen Meldungen, die für den Fahrer eines Kraftfahrzeuges speziell für dessen Fahrtroute ausgewählt sind, entweder nur in Verbindung mit einer aufwendigen Datenbasis, wie z.B. einer auf CD-ROM gespeicherten Karte eines Navigationssystems, oder ohne eine solche Datenbasis nur sehr grob möglich ist.

Aufgabe der Erfindung ist es daher, ein Verfahren für eine individuelle, genaue Verkehrsinformation anzugeben, das auf eine aufwendige Datenbasis in dem Kraftfahrzeug verzichten kann, und ein Empfangsgerät zur Ausführung des Verfahrens.

Diese Aufgabe wird dadurch gelöst, daß die Fahrzeugpositionen und Zielorte durch GPS-Koordinaten beschrieben werden, die Ortscodierung der Verkehrsinformationen ebenfalls mit GPS-Koordinaten erfolgt und dem Benutzer bekannte Bezeichnungen für geographische Gebiete bestimmten GPS-Koordinaten zugeordnet werden.

Die Erfindung hat den Vorteil, daß sie eine flexiblere und individuellere Auswahl von Verkehrsinformationen als bei den bisher bekannten Verfahren ermöglicht. Sie hat weiterhin den Vorteil, daß sie wegen des GPS-Koordinatensystems weltweit eingesetzt werden kann.

Der Benutzer gibt erfindungsgemäß z.B. den Namen seines Fahrtziels in das erfindungsgemäße Empfangsgerät ein, das dann für das Zielgebiet die entsprechend bestimmten GPS-Koordinaten zuordnet. Die bestimmten GPS-Koordinaten können z.B. den Mittelpunkt oder Schwerpunkt der jeweiligen geographischen Gebiete beschreiben. Die geographischen Gebiete können mit ihrem Namen, Ortsbezeichnungen, den jeweiligen Gebieten zugeordneten Postleitzahlen oder Telefonvorwahlnummern bezeichnet werden. Besonders vorteilhaft ist es, wenn für das Gebiet, für das die ersten beiden Ziffern der Postleitzahlen gleich sind, jeweils eine GPS-Koordinate zugeordnet wird. Die Auswahl der geographischen Gebiete wird weiterhin vorteilhafterweise durch den derzeitigen Standort und den Ort des Fahrtziels bestimmt, wobei der derzeitige Standort vorteilhafterweise durch ein GPS- oder Koppelortungsverfahren bestimmt wird und der Zielort manuell z.B. durch seinen Namen, die ersten zwei Ziffern der Postleitzahl oder durch die Telefonvorwahlnummer eingegeben werden kann. Aus den GPS-Koordinaten des derzeitigen Standortes und des Zielortes kann z.B. ein Kreissegment bestimmt werden, wobei der Mittelpunkt des Kreises vorteilhafterweise den derzeitigen Standort des Fahrzeugs darstellt und das Kreissegment durch die Verbindungslinie zwischen dem Fahrzeugstandort und dem Zielort in zwei gleich große Teile aufgeteilt wird. Dabei werden alle die Verkehrsmeldungen von dem Empfänger wiedergegeben, deren GPS-Koordinaten in das Kreissegment fallen. Der Öffnungswinkel und der Radius des Kreissegmentes können von weiteren Kriterien wie z.B. der aktuellen Fahrzeuggeschwindigkeit, der Fahrzeit, der Fahrtrichtungsänderung pro Zeit und der Entfernung zum Zielort abhängen.

Besonders vorteilhaft ist es weiterhin, wenn die Verkehrsinformationen beim Annähern an das der Verkehrsinformation zugrundeliegende Ereignis automatisch gemeldet werden.

Das Empfangsgerät für die Wiedergabe der Verkehrsinformation enthält erfindungsgemäß eine Datenbank, in der dem Benutzer bekannte Bezeichnungen für geographische Gebiete bestimmte GPS-Koordinaten zugeordnet sind.

Die Erfindung wird nachfolgend anhand der Figuren näher beschrieben. Es zeigen:
- Figur 1: den Ausschnitt aus einer erfindungsgemäßen Referenztabelle,
- Figur 2: eine Darstellung des Start- und Zielortes mit einer vorteilhaften Ausgestaltung des ausgewählten Gebietes in Form von Kreissegmenten.

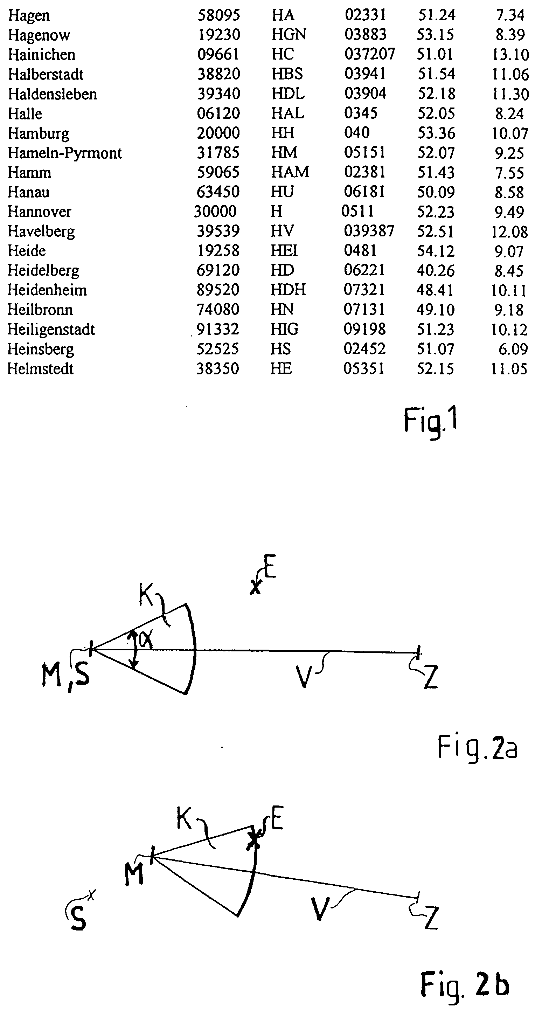

Zunächst werden die GPS-Koordinaten des Startortes S und Zielortes Z ermittelt. Sofern das erfindungsgemäße Empfangsgerät einen GPS-Empfänger aufweist, werden die GPS-Koordinaten des aktuellen Standortes als Startkoordinaten übernommen. Ist kein GPS-Empfänger vorhanden oder ist ein anderer Standort als der gegenwärtige Standort gewünscht, wird der Startort manuell beispielsweise durch eine Ortsbezeichnung, die ersten beiden Ziffern der Postleitzahlen des Startgebietes oder der Telefonvorwahl des Startgebietes angegeben. Die Eingabe kann derart erfolgen, daß entweder die allgemein bekannte Bezeichnung direkt über eine Tastatur eingegeben werden kann oder der Inhalt der Referenztabelle auf einer Anzeigevorrichtung, wie z.B. einem LCD-Display dargestellt wird und der gewünschte Ort angeklickt wird. Diesen allgemein bekannten Bezeichnungen werden dann über die Referenztabellen im Empfangsgerät die entsprechenden GPS-Koordinaten zugeordnet. Figur 1 stellt einen Teil einer möglichen Ausgestaltung einer erfindungsgemäßen Referenztabelle beispielhaft dar. Die Gebiete sind hierbei nach den Kfz-Zulassungsbezirken aufgeteilt. Zunächst ist der Name des Sitzes der Kraftfahrzeugzulassungsstelle angegeben, dann die jeweiligen Postleitzahlen für den Sitz der Kfz-Zulassungsstelle, die Abkürzung für die Kfz-Zulassungsstelle auf den amtlichen Kfz-Kennzeichen, die Telefonvorwahl für den Sitz der Kfz-Zulassungsstelle und die GPS-Koordinaten des ungefähren Mittelpunkts des entsprechenden Gebietes, wobei zuerst der Breitengrad und dann der Längengrad angegeben ist.

Der Zielort wird manuell in der zuvor beschriebenen Art und Weise eingegeben und ebenso in einen entsprechenden GPS-Code übersetzt. Die durch die Verbindung der so gewonnenen GPS-Koordinaten erhaltene Strecke V teilt vorteilhafterweise ein Kreissegment mit dem Radius r in zwei gleich große Hälften, wobei der Mittelpunkt M im Startort S bzw. dem jeweiligen aktuellen Standort P des Fahrzeugs liegt (Figur 2). Der Öffnungswinkel α und der Radius r des Kreissegmentes K können durch jeweils einen einzigen Wert fest vorgegeben sein. Möglich ist es aber auch, je nach z.B. der Entfernung zwischen dem Startort S und dem Zielort Z, dem jeweiligen Standort P und Zielort Z, der Fahrtgeschwindigkeit, der Fahrtzeit, der Fahrtrichtungsänderung pro Zeit oder der Entfernung zum Zielort den Öffnungswinkel α und den Radius r des Kreissegmentes K auszuwählen. Das vorliegende erfindungsgemäße Verfahren kann sowohl bei einer bidirektionalen Datenübertragung als auch bei einer Rundfunkübertragung (Cell-Broadcast) eingesetzt werden. Bei einer bidirektionalen Datenübertragung teilt das Empfangsgerät dem Sender vorteilhafterweise den jeweiligen Standort P bzw. gewünschten Startort S und den Zielort Z in GPS-Koordinaten mit, einschließlich eventueller sonstiger, für die Größenbestimmung des Kreissegments relevanter Daten. Das Sendegerät ermittelt daraufhin das in Frage kommende Kreissegment und übermittelt sämtliche Verkehrsinformationen, deren GPS-Koordinaten in das Kreissegment fallen. Das Empfangsgerät gibt sämtliche empfangenen Verkehrsinformationen wieder, z.B. durch eine Spracheinheit mittels Lautsprecher und/oder durch eine optische Anzeigevorrichtung.

Bei einer Rundfunkübertragung überträgt der Sender ortscodierte Verkehrsinformationen. Das Empfangsgerät ermittelt selbst das für die Auswahl der Verkehrsinformationen vorteilhafte Kreissegment und gibt die Verkehrsinformationen wieder, deren GPS-Koordinaten in das ermittelte Kreissegment fallen.

Im Beispiel in Figur 2 bezeichnet der Punkt E die GPS-Koordinaten, die einer Verkehrsinformation zugeordnet sind, z.B. einen Verkehrsstau am Punkt E. Da der Punkt E in Figur 2a noch außerhalb des Kreissegments K liegt, wird er von dem Empfänger noch nicht wiedergegeben. In Bild 2b befindet sich das Fahrzeug auf dem Punkt P und der Punkt E befindet sich im Kreissegment K. Somit wird die Verkehrsinformation wiedergegeben, die mit den GPS-Koordinaten für den Punkt E codiert ist.

Die Auswahl der Verkehrsinformationen kann z.B. auch dadurch erfolgen, daß alle Verkehrsmeldungen wiedergegeben werden, deren GPS-Koordinaten in den durch die Referenztabelle definierten Gebieten liegen, die von der Verbindungslinie V berührt oder geschnitten werden.

## Patentansprüche

1. Verfahren zur fahrtroutenspezifischen Selektion von Verkehrsinformationen, bei denen die Verkehrsinformationen von Sendern an Empfangsgeräte insbesondere in Kfz übertragen werden, wobei die Verkehrsinformationen Ortscodierungen für geographische Gebiete aufweisen,
geographische Gebiete anhand bestimmter Kriterien ausgewählt werden und
die Verkehrsinformationen für die ausgewählten geographischen Gebiete wiedergegeben werden, dadurch gekennzeichnet,
daß die Start- und Zielorte (S, Z) durch GPS-Koordinaten beschrieben werden,
daß die Ortscodierung mit GPS-Koordinaten erfolgt,
daß dem Benutzer bekannte Bezeichnungen für geographische Gebiete bestimmten GPS-Koordinaten zugeordnet werden.

2. Verfahren nach Anspruch 1, dadurch gekennzeichnet, daß die bestimmten GPS-Koordinaten den örtlichen Mittelpunkt oder Schwerpunkt des entsprechenden geographischen Gebietes beschreiben.

3. Verfahren nach Anspruch 1 oder 2, dadurch gekennzeichnet, daß es sich bei den Bezeichnungen für die geographischen Gebiete um den Namen der Gebiete, Ortsbezeichnungen, Postleitzahlen oder Telefonvorwahlnummern handeln.

4. Verfahren nach einem der vorstehenden Ansprüche, dadurch gekennzeichnet, daß jedem geographischen Gebiet, für das die ersten beiden Ziffern der Postleitzahlen gleich sind, jeweils eine GPS-Koordinate zugeordnet wird.

5. Verfahren nach einem der vorstehenden Ansprüche, dadurch gekennzeichnet, daß die geographischen Gebiete durch den derzeitigen Standort (P) und den Zielort (Z) bestimmt werden.

6. Verfahren nach Anspruch 5, dadurch gekennzeichnet, daß der derzeitige Standort (P) durch GPS- oder Koppelortungsverfahren ermittelt oder manuell eingegeben wird.

7. Verfahren nach Anspruch 5 oder 6, dadurch gekennzeichnet, daß der Zielort (Z) manuell eingegeben wird.

8. Verfahren nach einem der Ansprüche 5 bis 7, dadurch gekennzeichnet, daß aus den GPS-Koordinaten des derzeitigen Standortes (P) und des Zielortes (Z) ein Kreissegment (K) definiert wird, wobei alle diejenigen Verkehrsmeldungen wiedergegeben werden, deren GPS-Ortskoordinaten in das Kreissegment (K) fallen.

9. Verfahren nach Anspruch 8, dadurch gekennzeichnet, daß der Öffnungswinkel (α) und der Radius (r) des Kreissegments (K) von weiteren Kriterien (Fahrzeuggeschwindigkeit, Fahrtzeit, Fahrtrichtungsänderung pro Zeit, Entfernung zum Zielort) mitbestimmt wird.

10. Verfahren nach einem der vorstehenden Ansprüche, dadurch gekennzeichnet, daß die Verkehrsinformation beim Annähern an das der Verkehrsinformation zugrundeliegende Ereignis gemeldet wird.

11. Empfangsgerät zum Ausführen des Verfahrens nach einem der vorstehenden Ansprüche, dadurch gekennzeichnet, daß es eine Datenbank enthält, in der dem Benutzer des Empfangsgerätes bekannte Bezeichnungen für geographische Gebiete bestimmten GPS-Koordinaten zugeordnet sind.

12. Vorrichtung nach Anspruch 11, dadurch gekennzeichnet, daß der Inhalt der Datenbank auf einer Anzeigeeinrichtung anzeigbar ist.
